# EUROPEAN PATENT SPECIFICATION

(11) **EP 0 472 309 B1**
(45) Date of publication and mention of the grant of the patent: **03.05.1995**
(21) Application number: 91307040.5
(22) Date of filing: 31.07.1991
(51) Int. Cl.: B60G 11/27, B60G 17/052, B60G 17/005

(54) **Air suspensions for vehicles**
Luftaufhängung für Fahrzeuge
Suspensions pneumatiques pour véhicules

(30) Priority: 21.08.1990 GB 9018378
(43) Date of publication of application: 26.02.1992
(73) Proprietor: ROR ROCKWELL LIMITED, Llay Nr. Wrexham Clwyd LL12 0PB (GB)
(72) Inventor: Dixon, Alan Geoffrey, Dodleston, Chester (GB)
(74) Representative: Stonehouse, Sidney William

(56) References cited:
- EP-A- 0 373 681
- DE-A- 2 406 835
- GB-A- 2 191 741
- US-A- 2 627 403
- US-A- 3 332 701
- US-A- 4 783 096
- US-A- 4 826 204

## Description

This invention relates to air suspensions for vehicles wherein air springs are used and in which a long potential travel for the suspension is required to facilitate lifting of the vehicle chassis or frame. An example of such a vehicle is a freight carrying road trailer adapted for rail travel. One such vehicle is referred to in our British patent application no. 9107098.7.

A number of air suspensions of different designs and configurations are known. These have the common factors that they have a member or members to which a vehicle axle (or stub axle) is secured and the member is mounted to the vehicle and movable relative thereto to define the locus of the axle/stub axle relative to the vehicle, there being at least one air spring interposed between the member and the vehicle to provide a resilient connection.

One arrangement of a suspension system is known from US 2 627 403 which discloses a suspension system comprising an upper air spring superimposed upon a lower air spring. A saddle is provided intermediate each air spring and is held in position by a guide bar pivotally attached to the vehicle frame. The saddle retains the two air springs, which are individually inflated, in proper working relationship whilst permitting their working movement.

A further double air spring suspension system is known from US 4 783 096. This discloses a system corresponding to the preamble of claim 1, having a very high (height) carrying and/or lift capability in which a pair of stacked, expandable air bags are connected to the frame of a vehicle such that there is a lower beam for supporting the stack and an intermediate beam with plate member for stabilising the connection between the stacked airbags.

It is an aim of the present invention to provide an improved air suspension system.

According to the present invention there is provided an air suspension unit for a vehicle comprising a member adapted to be movably mounted to a vehicle and to have a vehicle axle or stub axle secured to it, a first air spring mounted on the member and adapted to act between a chassis of the vehicle and the member, a movable member adapted to be interposed between the first air spring and the chassis, a second air spring adapted to act between the movable member and the chassis, the first and second air springs being pneumatically connected and characterised in that the characteristics of the second air spring are such that it does not extend to lift the chassis over the normal working pressure range of the first air spring.
The first and second air springs may be selected so that, when they are pneumatically connected, the second air spring does not extend over the normal working pressure range of the first air spring due to the size of their respective effective areas over their working strokes.

Means may be provided to restrict the extension of the first air spring.

An embodiment of the invention will now be described by way of example only with reference to the accompanying drawings in which:-
Figure 1 is a side elevation showing an air suspension unit, two such units being required to make up a complete air suspension for one axle;
Figure 2 is a graph showing the relationship between effective area and extension for a first air spring of the air suspension unit; and
Figure 3 is a similar graph for a second air spring of the unit.

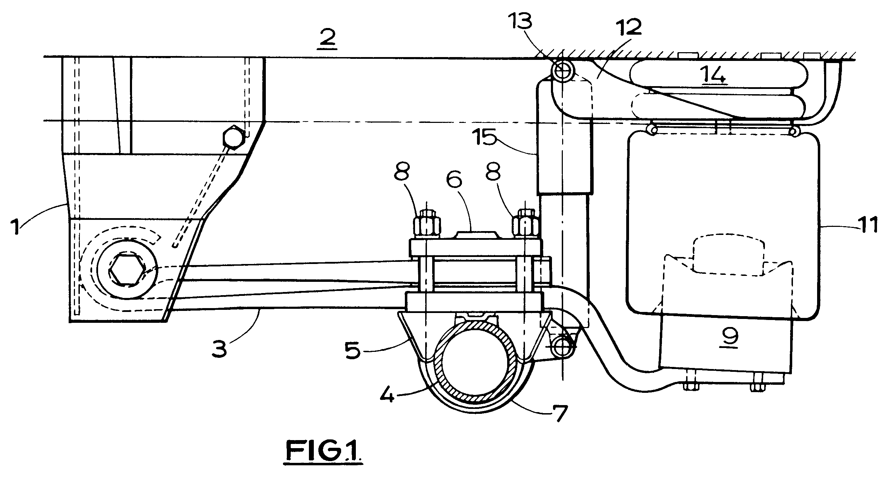

Referring to Figure 1, a hanger bracket 1 is secured to and depends from a chassis member 2 of a trailer (not shown). A member in the form of a two leaf spring 3 has its front end pivotally mounted to the lower end of bracket 1. An axle 4, shown in section, has a spring seat 5 secured to it as by welding. The spring seat 5 and a top plate 6 are clamped to the spring 3 by U bolts 7 and nuts 8. A piston 9 of a first air spring 11 is secured as by bolts to the rear end of the lower leaf of the spring 3.

The upper end of the first air spring 11 is secured to a mounting plate 12 which engages the trailer chassis, abutting the trailer chassis at its front and rear ends, as shown in Figure 1.

A second air spring 14 is mounted between an upper surface of the mounting plate 12 and the chassis 2. A shock absorber 15 is pivotally mounted, as at 13, 13A, between the mounting plate 12 and the spring seat 5.

The suspension unit which has been described is duplicated at the other side of the trailer. If the trailer wheels are independently suspended then there will be one suspension unit (which is likely to be of different design but utilising a first air spring and a member to which a stub axle is secured which controls the locus of the stub axle in use) on each side of the trailer. This arrangement will be repeated for each axle/pair of stub axles but the number of second air springs will depend on the lifting capacity required.

In operation the first and second air springs 11, 14 may be independently supplied with pressure air whereby the first air spring 11 is pressurised for normal operation and the second air spring 14 is independently supplied with pressure air when it is desired to raise the chassis 2 further than extension of the first air spring 11 permits.

However, it is preferred that the air springs 11, 14 are both connected to the same source of pressure air.

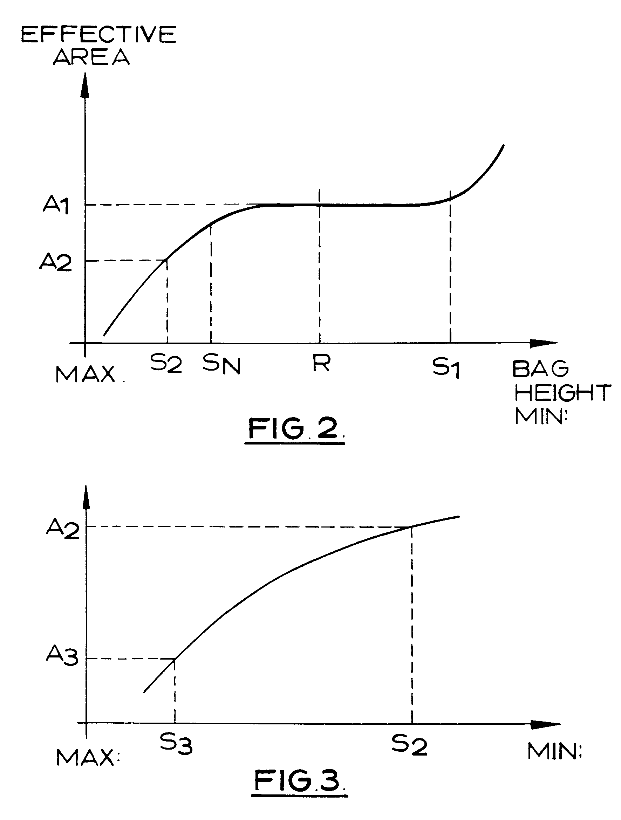

Referring now to Figure 2, this is a graph showing a typical relationship between the effective area and the bag height for an air spring in a suspension such as has been described with reference to Figure 1. R denotes the normal ride height position and S1 the full bump position, i.e. closure of the air spring to its minimum operational bag height.

SN denotes the normal maximum extension of the air spring, at which it will be seen the effective area has reduced and that increasing pressure is required to obtain further extension. During such further extension the effective area continues to decrease, further increasing the required pressure for additional extension. This is seen, for example, in the region of AS, S2 on the graph where S2 denotes the maximum rebound position, defined by maximum extension of the shock absorber 15 or by a check strap. The effective area over most of the operational range is substantially constant, indicated by A1.

Referring now to Figure 3, the horizontal scale has been reversed so that increasing extension is indicated towards the origin. The condition A2, S2 corresponds to the condition A2, S2 on Figure 2 and it will be seen that increasing pressure extends the second air spring 14 in a second stage of lift causing separation of the mounting plate 12 from the chassis 2 whereby the chassis 2 is raised. A3, S3 indicates the maximum extension of the second air spring 14, which is dictated by the available air pressure in the system or, if desired, by a mechanical restraint before the air spring 14 is fully extended.

On release of air pressure the air springs 11, 14 will close due to the weight of the chassis and any load it carries.

The air feed connection between the air springs 11, 14 is preferably of low cross-sectional area in order to reduce the possibility of high pressure spikes generated during rough road running causing premature extension of the second air spring 14.

If desired, a mechanical latch could be provided between the mounting plate 12 and the chassis 2 to prevent inadvertent extension of the second air spring 14. This latch might be spring engaged and disengaged manually or, for example, by operation of a pneumatic, electric or hydraulic motor.

The second air spring 14 is shown as a convoluted type bag. Preferably this air spring is one which is tolerant of angular articulation so as to avoid the internal chafing which might occur with a conventional rolling lobe type bag if used at a very long stroke and a consequent high angle of articulation.

The tow air springs 11, 14 have been shown mounted one vertically above the other. However, this is not necessary and they may have lateral/longitudinal displacement from one another, subject to the requirements of effective area and pressure for operation which will change with change of moment arms about the pivot.

It will be appreciated that any restraint on extension of the first air spring 11 must permit extension of the second air spring 14 to achieve the second stage lift. In the embodiment which has been described the shock absorber 15, on full extension, acts as a restraint to limit the extension of the first air spring 11.

## Claims

1. An air suspension unit for a vehicle comprising a member (3) adapted to be movably mounted to a vehicle and to have a vehicle axle or stub axle secured to it, a first air spring (11) mounted on the member (3) and adapted to act between a chassis of the vehicle and the member (3), a movable member (12) adapted to be interposed between the first air spring (11) and the chassis, a second air spring (14) adapted to act between the movable member and the chassis, the first and second air springs (11;14) being pneumatically connected and characterised in that the characteristics of the second air spring (14) are such that it does not extend to lift the chassis over the normal working pressure range of the first air spring (11).

2. An air suspension unit as claimed in claim 1 characterised in that restriction means is provided in the pneumatic connection between the first and second air springs (11; 14), the restriction means being adapted to attenuate transient peak pressures travelling from the first air spring (11) to the second air spring (14) during road travel of a vehicle to which the unit is fitted for use.

3. An air suspension unit as claimed in Claim 1 or Claim 2 characterised in that a shock absorber (15) is pivotally mounted to act between the movable member (12) and the member (3), or an axle or stub axle carried thereby in use, the shock absorber (15), when fully extended, limiting the extension of the first air spring (11).

4. An air suspension unit as claimed in any preceding claim characterised in that a releasable mechanical lock is provided adapted to act between the movable member (12) and the chassis the lock being engagable during road travel of a vehicle to which the unit is fitted for use, and being releasable to enable the chassis to be lifted.

5. A vehicle characterised in that it has an axle (4) secured to the vehicle chassis (2) by two air suspension units each as claimed in any preceding claim.

6. A vehicle having two aligned stub axles characterised in that each stub axle is secured to the vehicle chassis (2) by an air suspension unit as claimed in any one of claims 1 to 4.

## Patentansprüche

1. Eine Luftfederungseinheit für ein Fahrzeug, welches aus einem Element (3), welches angepaßt ist, beweglich an einem Fahrzeug befestigt zu sein und eine Fahrzeugachse oder Achsschenkel daran sicher befestigt zu haben, einer ersten Luftfeder (11), die an dein Element (3) befestigt ist und angepaßt ist, zwischen einem Fahrgestell des Fahrzeugs und dem Element (3) zu wirken, einem beweglichen Element (12), das angepaßt ist, zwischen der ersten Luftfeder (11) und dem Fahrgestell angeordnet zu sein, einer zweiten Luftfeder (14), die angepaßt ist, zwischen dem beweglichen Element und dem Fahrgestell zu wirken, besteht, wobei die erste und zweite Luftfeder (11, 14) pneumatisch verbunden sind und dadurch gekennzeichnet sind, daß die Charakteristiken der zweiten Luftfeder (14) so sind, daß sie sich im normalen Arbeitsdruckbereich der ersten Luftfeder (11) nicht so ausdehnt, daß das Fahrgestell angehoben wird.

2. Eine Luftfederungseinheit nach Anspruch 1,
**dadurch gekennzeichnet,**
daß durch die pneumatische Verbindung zwischen der ersten und zweiten Luftfeder (11,14) eine Rückhalteeinrichtung zur Verfügung gestellt ist, die angepaßt ist, während der Fahrt eines Fahrzeugs, an das die Einheit zur Verwendung angepaßt ist, Übergangsspitzendrücke, die sich von der ersten Luftfeder (11) zu der zweiten Luftfeder (14) bewegen, abzuschwächen.

3. Eine Luftfederungseinheit nach Anspruch 1 oder Anspruch 2,
**dadurch gekennzeichnet**,
daß ein Stoßdämpfer (15) schwenkbar befestigt ist, um beim Gebrauch zwischen dem beweglichen Element (12) und dem Element (3) oder einer dadurch getragenen Achse oder Achsschenkel zu wirken, wobei der Stoßdämpfer (15) die Ausdehnung der ersten Luftfeder (11) begrenzt, wenn er vollständig ausgedehnt ist.

4. Eine Luftfederungseinheit nach einem der voranstehenden Ansprüche,
**dadurch gekennzeichnet**,
daß ein lösbarer mechanischer Verschluß vorgesehen ist, der angepaßt ist, um zwischen dein beweglichen Element (12) und dein Fahrgestell zu wirken, wobei der Verschluß während der Fahrt eines Fahrzeugs, an das die Einheit zur Verwendung angepaßt ist, in Eingriff steht und lösbar ist, um ein Heben des Fahrgestells zu ermöglichen.

5. Ein Fahrzeug,
**dadurch gekennzeichnet**,
daß es eine Achse (4) besitzt, die fest an dein Fahrgestell (2) des Fahrzeugs durch zwei Luftfederungseinheiten, jede wie in irgendeinem der voranstehenden Ansprüche beansprucht, sicher befestigt ist.

6. Ein Fahrzeug mit zwei fluchtenden Achsschenkeln,
**dadurch gekennzeichnet**,
daß jeder Achsschenkel an dem Fahrgestell (2) des Fahrzeugs durch eine Luftfederungseinheit, wie in irgendeinem der Ansprüche 1 bis 4 beansprucht, sicher befestigt ist.

## Revendications

1. Unité de suspension pneumatique pour un véhicule comprenant un élément (3) apte à être monté, de manière à pouvoir se déplacer, sur un véhicule et auquel peut être fixé un essieu ou une fusée d'essieu au véhicule, un premier ressort pneumatique (11) monté sur l'élément (3) et apte à agir entre un châssis du véhicule et l'élément (3), un élément mobile (12) apte à être interposé entre le premier ressort pneumatique (11) et le châssis, un second ressort pneumatique (14) apte à agir entre l'élément mobile et le châssis, les premier et second ressorts pneumatiques (11;14) étant raccordés pneumatiquement, et caractérisée en ce que les caractéristiques du second ressort pneumatique (14) sont telles qu'il ne se déploie pas pour soulever le châssis au-delà de la gamme des pressions normales de travail du premier ressort pneumatique (11).

2. Unité de suspension pneumatique selon la revendication 1, caractérisée en ce que des moyens de limitation sont disposés dans la liaison pneumatique entre les premier et second ressorts pneumatiques (11;14), les moyens de limitation étant adaptés pour atténuer des pressions maximales transitoires se propageant du premier ressort pneumatique (11) jusqu'au second ressort pneumatique (14) pendant le déplacement sur route d'un véhicule, sur lequel l'unité est montée pour son utilisation.

3. Unité de suspension pneumatique selon la revendication 1 ou 2, caractérisée en ce qu'un amortisseur (15) est monté, de manière à pouvoir pivoter, pour agir entre l'élément mobile (12) et l'élément (3), ou un essieu ou une fusée d'essieu porté par cet élément en cours d'utilisation, auquel cas, lorsque l'amortisseur (15) est totalement déployé, il limite le déploiement du premier ressort pneumatique (11).

4. Unité de suspension pneumatique selon l'une quelconque des revendications précédentes, caractérisée en ce qu'il est prévu un verrou mécanique déblocable, adapté pour agir entre l'élément mobile (12) et le châssis, le verrou pouvant être enclenché pendant un déplacement sur route d'un véhicule, sur lequel l'unité est montée pour son utilisation, et pouvant être débloqué pour permettre le soulèvement du châssis.

5. Véhicule, caractérisé en ce qu'il possède un essieu (4) fixé au châssis (2) du véhicule par deux unités de suspension pneumatique, chacune telle que revendiquée dans l'une quelconque des revendications précédentes.

6. Véhicule comportant deux fusées d'essieu alignées, caractérisé en ce que chaque fusée d'essieu est fixée au châssis (2) du véhicule par une unité de suspension pneumatique telle que revendiquée dans l'une quelconque des revendications 1 à 4.
